# EUROPEAN PATENT SPECIFICATION

(11) **EP 4 020 678 B1**
(45) Date of publication and mention of the grant of the patent: **01.04.2026**
(21) Application number: 20914153.0
(22) Date of filing: 30.11.2020
(51) Int. Cl.: H01M 50/107, H01M 50/574, H01M 50/186, H01M 50/152

(54) **CYLINDRICAL BATTERY AND METHODS FOR MANUFACTURING SUCH CYLINDRICAL BATTERY**
ZYLINDRISCHE BATTERIE UND VERFAHREN ZUR HERSTELLUNG EINER SOLCHEN ZYLINDRISCHEN BATTERIE
BATTERIE CYLINDRIQUE ET PROCÉDÉ DE FABRICATION D'UNE TELLE BATTERIE CYLINDRIQUE

(30) Priority: 13.01.2020 KR 20200004258
(43) Date of publication of application: 29.06.2022
(73) Proprietor: LG ENERGY SOLUTION, LTD., Seoul 07335 (KR)
(72) Inventor: PARK, Inbok, Daejeon 34122 (KR)
(74) Representative: Goddar, Heinz J.
(86) International application number: PCT/KR2020/017326
(87) International publication number: WO 2021/145558

(56) References cited:
- WO-A1-99/66569
- CN-C- 100 463 283
- JP-A- 2017 084 742
- JP-A- 2017 084 742
- JP-A- H1 186 833
- JP-A- H1 186 833
- KR-A- 20040 089 260
- KR-A- 20190 099 924
- KR-B1- 100 516 108

## Description

The present invention claims the benefit of Korean Patent Application No. 10-2020-0004258 filed on January 13, 2020 in the Korean Intellectual Property Office.

The present invention relates to a cylindrical battery and methods for manufacturing such cylindrical battery, see claims 1 and 14-15 respectively.

### [BACKGROUND ART]

As energy prices are increasing due to the depletion of fossil fuels and increasing attention is being paid to environmental pollution, the demand for environmentally-friendly alternative energy sources acts as an essential factor for future life. Thus, research into techniques for generating various kinds of power, such as nuclear energy, solar energy, wind energy, and tidal power, is underway, and power storage apparatuses for more efficient use of the generated energy are also drawing much attention.

Moreover, the demand for batteries as energy sources is rapidly increasing as mobile device technology continues to develop and the demand for such mobile devices continues to increase. Accordingly, much research on batteries capable of satisfying various needs has been carried out. In particular, in terms of the material for batteries, the demand for lithium secondary batteries, such as lithium ion batteries and lithium ion polymer batteries, which have advantages such as high energy density, discharge voltage, and output stability, is very high.

Secondary batteries may be classified based on the structure of an electrode assembly having a structure in which a positive electrode and a negative electrode are stacked in the state in which a separator is interposed between the positive electrode and the negative electrode. For example, the electrode assembly may be configured to have a jelly-roll (wound) type structure in which a long sheet type positive electrode and a long sheet type negative electrode are wound with a separator being interposed between the positive electrode and the negative electrode or a stacked (laminated) type structure in which pluralities of positive electrodes and negative electrodes, cut into predetermined unit sizes, are sequentially stacked with separators being interposed between the positive electrodes and the negative electrodes. **In** recent years, in order to solve problems caused by the jelly-roll type electrode assembly and the stacked type electrode assembly, there has been developed a stacked/folded type electrode assembly, which is a combination of the jelly roll type electrode assembly and the stacked type electrode assembly, having an improved structure in which predetermined numbers of positive electrodes and negative electrodes are sequentially stacked in the state in which separators are disposed respectively between the positive electrodes and the negative electrodes to constitute a unit cell, after which a plurality of unit cells is sequentially folded in the state of having been placed on a separation film.

These electrode assemblies are mounted in a pouch case, a cylindrical can, a prismatic case, and the like depending on the purpose of use to produce a battery.

Among them, the cylindrical battery has the advantages of being easy to manufacture and having a high energy density per weight, and thus, is used as an energy source for various devices ranging from portable computers to electric vehicles.

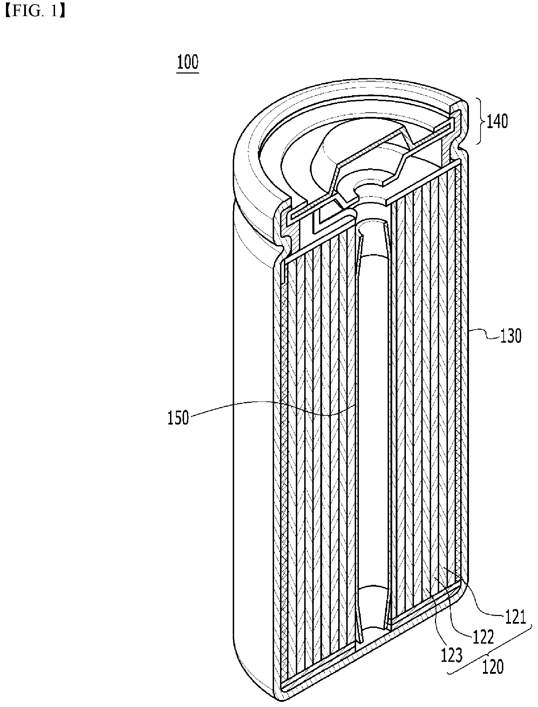

FIG. 1 is a schematic diagram showing a conventional cylindrical battery.

Referring to FIG. 1, the cylindrical battery 100 is manufactured by housing a jelly-roll type electrode assembly 120 in a cylindrical case 130, injecting an electrolyte solution in the cylindrical case 130, and coupling a top cap 140 to an opened upper end of the cylindrical case 130.

The jelly-roll type electrode assembly 120 has a structure, in which a positive electrode 121, a separator 122 and a negative electrode 123 are stacked in a sequence to be wound in a round shape, and a cylindrical center pin 150 is inserted into a central part of the electrode assembly 120, which is a mandrel thereof. The center pin 150 functions to fix and support the electrode assembly 120, and also functions as a passage for discharging gas generated by internal reactions at the time of charging/discharging and operation. However, the center pin 150 may not be used depending on the specifications of the cylindrical battery 100.

In the charging/discharging process of the cylindrical battery 100, the electrodes of the electrode assembly 120 are repeatedly expanded and contracted. Therefore, structural deformation occurs in which the electrode assembly 120 is distorted. In particular, the deformation occurs more severely in the central part of the electrode assembly 120 where stress is concentrated.

In addition, the cylindrical battery 100 generates high thermal energy inside the cylindrical battery 100 in the charging/discharging process. However, the conventional cylindrical battery 100 does not have a system capable of rapidly discharging the thermal energy. In particular, recently, the demand for a cylindrical battery capable of high capacity and high output is increasing. Accordingly, when an electrode highly loaded with an active material is used, there is a problem that runaway may occur.

CN 100 463 283 C shows, according to its abstract, a cylindrical lithium battery and its preparation method, wherein the cylindrical battery includes a cylindrical can body having an open top, the can body including an electrode assembly, the electrode assembly being wound into a cylindrical shape, having a space defined at the center thereof. A center pin is provided in the space of the electrode assembly and is pressed against the electrode assembly by a force acting outwardly toward the electrode assembly, and the lid assembly is attached to the top of the cylindrical tank.

### [DETAILED DESCRIPTION OF THE INVENTION]

### [Technical Problem]

It is an object of the present invention to provide a cylindrical battery that can prevent deformation and runaway of the electrode assembly, and methods for manufacturing such cylindrical battery.

### [Technical Solution]

According to a first embodiment of the present invention, a cylindrical battery is defined in claim 1, the battery comprising electrode assemblies, and top cap assemblies located on the upper part of the electrode assemblies, wherein the top cap assemblies are electrically separated from each other by an insulator.

The top cap assembly includes a first top cap assembly and a second top cap assembly. The first top cap assembly may include a first upper end cap, a first current interruptive device, and a first gas storage unit, and the second top cap assembly may include a second upper end cap, a second current interruptive device, and a second gas storage unit.

The insulator may include an upper insulator and a lower insulator.

The upper insulator may have a "Π"-shaped cross-sectional shape.

The upper insulator may be coupled in a structure that wraps an intermediate part of the lower insulator.

The lower insulator may be located between the first current interruptive device and the second current interruptive device, and may electrically insulate the first current interruptive device and the second current interruptive device.

The upper insulator may be attached to the first current interruptive device and the second current interruptive device.

Even if any one of the first current interruptive device and the second current interruptive device is operated, the upper insulator may move upward and protrude to the outside.

When the first current interruptive device or the second current interruptive device is operated, gas generated in the electrode assembly may be collected in the first gas storage unit and the second gas storage unit.

When the upper insulator moves upward to a height L1 or higher due to the pressure of the gas collected in the first gas storage unit and the second gas storage unit, the gas collected in the first gas storage unit and the second gas storage unit may be discharged to the outside.

The insulator may include a first insulator, a second insulator, and a lower insulator.

The first insulator and the second insulator may be structured so as to be separated from each other.

The first insulator is attached to the first current interruptive device, and when the first current interruptive device is operated, the first insulator may move upward and protrude.

The second insulator is attached to the second current interruptive device, and when the second current interruptive device is operated, the second insulator may move upward and protrude.

The electrode assembly includes a first electrode assembly and a second electrode assembly, and the first electrode assembly may be located in the central part of the second electrode assembly.

A first positive electrode tab of the first electrode assembly may be electrically connected to the first top cap assembly, and a second positive electrode tab of the second electrode assembly may be electrically connected to the second top cap assembly.

According to a second embodiment of the present invention, a method for manufacturing a cylindrical battery according to the first embodiment is defined in claim 14, the method comprising the steps of: winding a first positive electrode, a first separator, and a first negative electrode to manufacture a first electrode assembly; winding a second positive electrode, a second separator, and a second negative electrode to manufacture a second electrode assembly; inserting the first electrode assembly into the central part of the second electrode assembly; electrically connecting a first positive electrode tab of the first electrode assembly to a first top cap assembly; and electrically connecting a second positive electrode tab of the second electrode assembly to a second top cap assembly.

According to a third embodiment of the present invention, a method for manufacturing a cylindrical battery according to the first embodiment is defined in claim 15, the method comprising the steps of: winding a first positive electrode, a first separator, and a first negative electrode to manufacture a first electrode assembly; winding a stack of a second positive electrode, a second separator, and a second negative electrode using the first electrode assembly as a mandrel to manufacture a second electrode stack, inserting the first electrode assembly into the central part of the second electrode assembly; electrically connecting a first positive electrode tab of the first electrode assembly to a first top cap assembly; and electrically connecting a second positive electrode tab of the second electrode assembly to a second top cap assembly.

### [ADVANTAGEOUS EFFECTS]

As described above, the cylindrical battery according to the embodiment of the present invention can prevent the cylindrical battery from being damaged or deformed by using electrically separated top cap assemblies.

### [BRIEF DESCRIPTION OF THE DRAWINGS]

FIG. 1 is a schematic view showing a conventional cylindrical battery.
FIG. 2 is a schematic view of a cylindrical battery according to an embodiment of the present disclosure.
FIG. 3 is a schematic cross-sectional view of the top cap assembly taken along the line A-A' in FIG. 2.
FIG. 4 is a schematic view showing a state in which the upper insulator of FIG. 3 is protruded upward.
FIG. 5 is a schematic view showing the insulator of FIG. 2.
FIG. 6 is a schematic cross-sectional view showing a top cap assembly according to another embodiment of the present disclosure.
FIG. 7 is a schematic cross-sectional view showing a top cap assembly according to another embodiment of the present disclosure.
FIG. 8 is a schematic view showing that the electrode assembly of FIG. 2 is manufactured according to an embodiment of the present disclosure.
FIG. 9 is a schematic diagram showing that the electrode assembly of FIG. 2 is manufactured according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Further, throughout the specification, when a portion is referred to as "including" a certain component, it means that the portion can further include other components, without excluding the other components, unless otherwise stated.

Further, throughout the specification, "upward" means the direction opposite to the gravity acting direction.

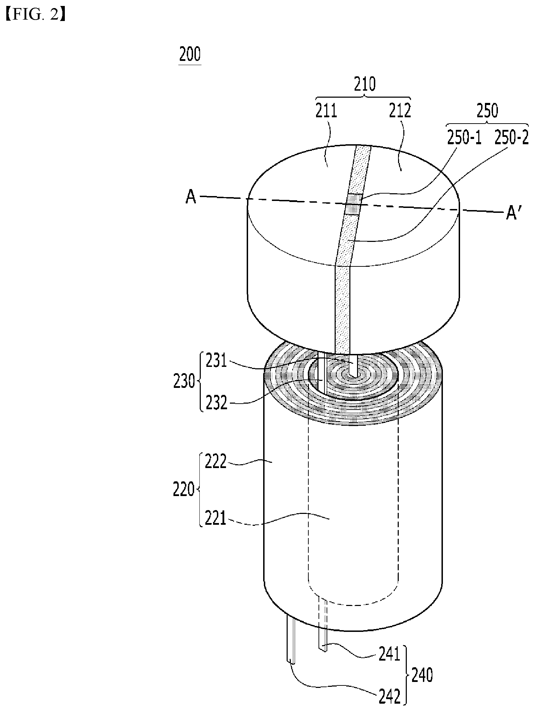

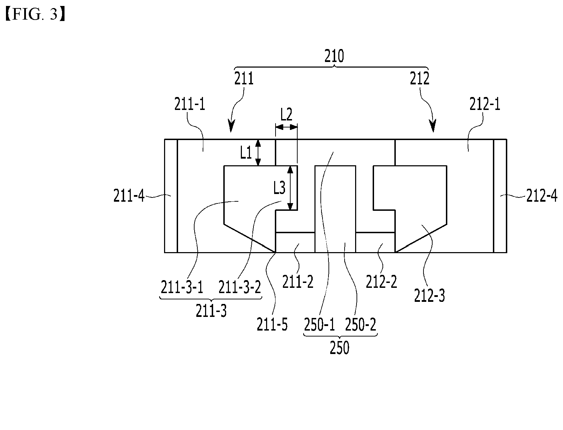

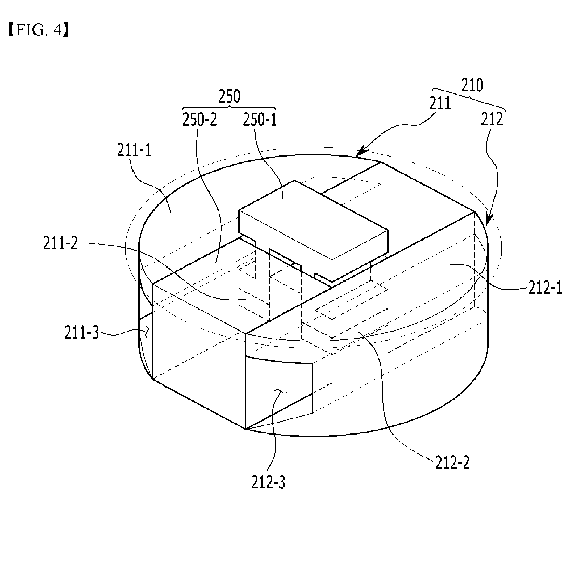

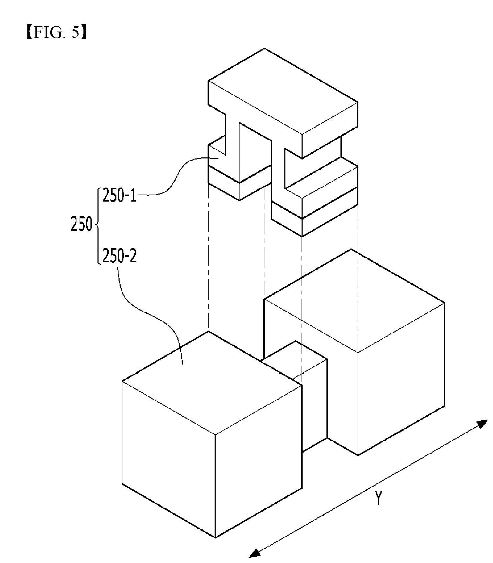

FIG. 2 is a schematic view of a cylindrical battery according to an embodiment of the present disclosure. FIG. 3 is a schematic cross-sectional view of the top cap assembly taken along the line A-A' in FIG. 2. FIG. 4 is a schematic view showing a state in which the upper insulator of FIG. 3 was protruded upward. FIG. 5 is a schematic view showing the insulator of FIG. 2.

Referring to FIGS. 2 to 5, the cylindrical battery 200 may be a structure in which a jelly-roll type electrode assembly 220 is inserted into a battery case (not shown). A positive electrode tab 23 is formed in the upper part of the electrode assembly 220 to be electrically connected to a top cap assembly 210. A negative electrode tab 240 is formed in the lower part of the electrode assembly 220 to be electrically connected to the battery case. The positive electrode tab 230 includes a first positive electrode tab 231 and a second positive electrode tab 232. The negative electrode tab 240 may include a first negative electrode tab 241 and a second negative electrode tab 242.

The top cap assembly 210 includes a first top cap assembly 211 and a second top cap assembly 212. The first top cap assembly 211 and the second top cap assembly 212 may be electrically separated by the insulator 250. The first top cap assembly 211 and the second top cap assembly 212 may be structured so as to be mutually symmetrical with respect to the insulator 250.

The first positive electrode tab 231 is electrically connected to the second top cap assembly 212. The second positive electrode tab 232 is electrically connected to the first top cap assembly 211.

The insulator 250 may be formed in a structure extending in the length and width directions of the top cap assembly 210 while passing through the central part of the top cap assembly 210. The insulator 250 may include an upper insulator 250-1 and a lower insulator 250-2.

The first top cap assembly 211 may include a first upper end cap 211-1, a first current interruptive device 211-2, a first gas storage unit 211-3, and a gasket 211-4. The first upper end cap 211-1 may form a positive electrode terminal in a form of being exposed to the outside. The first current interruptive device 211-2 may be formed in the lower part of the upper insulator 250-1.

The second top cap assembly 212 includes a second upper end cap 212-1, a second current interruptive device 212-2, a second gas storage unit 212-3, and a second gasket 212-4. The second upper cap 212-1 may form a positive electrode terminal in a form of being exposed to the outside of the cylindrical battery 200. The second current interruptive device 212-2 may be formed in the lower part of the upper insulator 250-1.

The upper insulator 250-1 may be structured so as to be attached to the first current interruptive device 211-2 and the second current interruptive device 212-2. Thus, even if any one of the first current interruptive device 211-2 and the second current interruptive device 212-2 is operated, the upper insulator 250-1 may move upward and protrude to the outside.

For example, when the first current interruptive device 211-2 is operated, the upper insulator 250-1 moves upward, and the second current interruptive device 212-2 attached to the upper insulator 250-1 can also move upward together. In addition, when the second current interruptive device 212-2 is operated, the upper insulator 250-1 moves upward, and the first current interruptive device 211-2 attached to the upper insulator 250-1 can also move upwards together.

Further, when the upper insulator 250-1 moves upward and protrudes to the outside, the operator can visually confirm the degree of protrusion of the upper insulator 250-1. And, the degree of generation of the internal gas can be grasped through the degree of protrusion of the upper insulator 250-1.

The upper insulator 250-1 may have a "Π" shaped cross section cut along the line A-A'. The upper insulator 250-1 may be formed at an intermediate part in the length direction Y of the lower insulator 250-2. The upper insulator 250-1 may be coupled in a structure that wraps the intermediate part of the lower insulator 250-2.

The lower insulator 250-2 may be located between the first current interruptive device 211-2 and the second current interruptive device 212-2. The first current interruptive device 211-2 and the second current interruptive device 212-2 may be structured to be electrically insulated from each other by the lower insulator 250-2.

When the first current interruptive device 211-2 or the second current interruptive device 212-2 is operated, the gas generated in the electrode assembly 220 is collected in the first gas storage unit 211-3 and the second gas storage unit 212-3. And, when the upper insulator 250-1 moves upward to a height L1 or higher due to the pressure of the gas collected in the first gas storage unit 211-3 and the second gas storage unit 212-3, the gas collected in the first gas storage unit 211-3 and the second gas storage unit 212-3 may be discharged to the outside.

The first gas storage unit 211-3 may include a first recess part 211-3-1 and a second recess part 211-3-2. The first recess part 211-3-1 may be a space formed by being recessed toward the first upper end cap 211-1. The second recess part 211-3-2 may be a space formed by being recessed toward the upper insulator 250-1. The first gas storage unit 211-3 may be formed between the first recess part 211-3-1, the second recess part 211-3-2, and the first current interruptive device 211-2.

When the upper insulator 250-1 moves upward to the first height L1 or higher, the air collected in the first gas storage unit 211-3 may be discharged to the outside while the second recess part 211-3-2 is exposed to the outside.

The size of the path through which the gas collected in the first gas storage unit 211-3 is discharged may be determined based on the height L3 and the width L2 of the second recess part 211-3-2. In particular, as the width L2 is larger, the gas discharge path may be formed to be larger.

The first contact part 211-5 may be a contact part between the first upper end cap 211-1 and the first current interruptive device 211-2. When the first current interruptive device 211-2 moves upward, the first contact part 211-5 is opened, and the internal gas may be collected in the first gas storage unit 211-3. Here, the first contact part 211-5 being opened means that the first upper end cap 211-1 and the first current interruptive device 211-2 are separated. The internal gas can move through a space generated while the first upper end cap 211-1 and the first current interruptive device 211-2 are separated, thereby being collected in the first gas storage part 211-3.

The second top cap assembly 212 may have the same structure as the first top cap assembly 211. Therefore, details of the second top tab assembly 212 will be omitted.

The second gas storage unit 212-3 may have the same structure as the first gas storage unit 211-3. In addition, the second gas storage unit 212-3 may collect and discharge gas in the same manner as the first gas storage unit 211-3. Therefore, details of the second gas storage unit 212-3 will be omitted.

The first gas storage unit 211-3 and the second gas storage unit 212-3 may contain a fire extinguishing gas. The fire extinguishing gas may be carbon dioxide or nitrogen gas. The fire extinguishing gas may prevent fires caused by runaway that may occur due to an abnormal operation of the cylindrical battery 200.

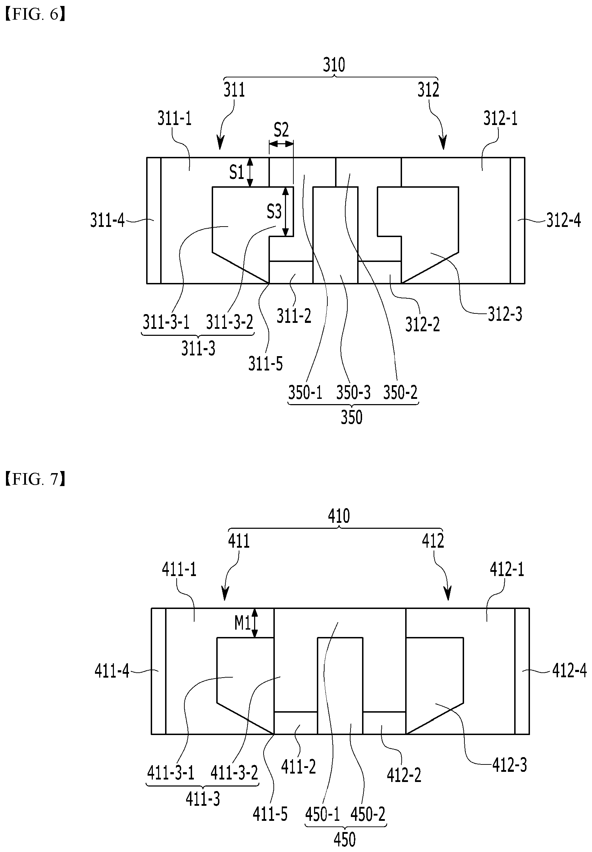

FIG. 6 is a schematic cross-sectional view showing a top cap assembly according to another embodiment of the present disclosure.

Referring to FIG. 6, the top cap assembly 310 may include a first top cap assembly 311 and a second top cap assembly 312. The first top cap assembly 311 and the second top cap assembly 312 may be electrically separated by the insulator 350. The first top cap assembly 311 and the second top cap assembly 312 may be structured so as to be mutually symmetrical with respect to the insulator 350.

The insulator 350 may be formed in a structure extending in the length and width directions of the top cap assembly 310 while passing through the central part of the top cap assembly 310. The insulator 350 may include a first insulator 350-1, a second insulator 350-2 and a lower insulator 350-3.

The first top cap assembly 311 may include a first upper end cap 311-1, a first current interruptive device 311-2, a first gas storage unit 311-3, and a gasket 311-4. The first upper end cap 311-1 may form a positive electrode terminal in a form of being exposed to the outside. The first current interruptive device 311-2 may be formed in the lower part of the first insulator 350-1.

The second top cap assembly 312 may include a second upper end cap 312-1, a second current interruptive device 312-2, a gas storage unit 312-3, and a second gasket 312-4. The second upper cap 312-1 may form a positive electrode terminal in a form of being exposed to the outside. The second current interruptive device 312-2 may be formed in the lower part of the second insulator 350-2.

The first insulator 350-1 may be structured so as to be attached to the first current interruptive device 311-2. Therefore, when the first current interruptive device 311-2 is operated, the first insulator 350-1 may move upward and protrude.

The second insulator 350-2 may be structured so as to be attached to the second current interruptive device 312-2. Therefore, when the second current interruptive device 312-2 is operated, the second insulator 350-2 may move upward and protrude.

The first insulator 350-1 and the second insulator 350-2 may be structured so as to be separated from each other. Therefore, the first insulator 350-1 and the second insulator 350-2 may be separated and operated.

The first current interruptive device 311-2 and the second current interruptive device 312-2 may be structured so as to be electrically separated by a lower insulator 350-3. In addition, the first current interruptive device 311-2 and the second current interruptive device 312-2 do not affect mutual operation.

When the first current interruptive device 311-2 is operated, internal gas may be collected in the first gas storage unit 311-3. And, when the first insulator 350-1 moves upward to the height S1 or higher due to the gas pressure collected in the first gas storage unit 311-3, the gas collected in the first gas storage unit 311-3 may be discharged to the outside.

The first gas storage unit 311-3 may include a first recess part 311-3-1 and a second recess part 311-3-2. The first recess part 311-3-1 may be a space formed by being recessed toward the first upper end cap 311-1. The second recess part 311-3-2 may be a space formed by being recessed toward the first insulator 350-1. The first gas storage unit 311-3 may be formed between the first recess part 311-3-1, the second recess part 311-3-2, and the first current interruptive device 311-2.

When the first insulator 350-1 moves upward to the height S1 or higher, the second recess part 311-3-2 is exposed to the outside, and the air collected in the first gas storage unit 311-3 can be discharged to the outside.

Based on the height S3 and the width S2 of the second recess part 311-3-2, the size of the path through which the gas collected in the first gas storage unit 311-3 is discharged may be determined. In particular, as the width L2 is larger, the gas discharge path may be formed to be larger.

The first contact part 311-5 may be a contact part between the first upper end cap 311-1 and the first current interruptive device 311-2. When the first current interruptive device 311-2 moves upward, the first contact part 311-5 is opened and the discharged gas may be collected in the first gas storage unit 311-3. Here, the first contact part 511-5 being opening means that the first upper end cap 311-1 and the first current interruptive device 311-2 are separated. The internal gas may be moved through a space generated while the first upper cap 311-1 and the first current interruptive device 311-2 are separated, thereby being collected in the first gas storage part 311-3.

The second top cap assembly 312 may have the same structure as the first top cap assembly 311. Therefore, details of the second top tab assembly 312 will be omitted.

The second gas storage unit 312-3 may have the same structure as the first gas storage unit 311-3. In addition, the second gas storage unit 312-3 may collect and discharge gas in the same manner as the first gas storage unit 311-3. Therefore, details of the second gas storage unit 312-3 will be omitted.

The first gas storage unit 311-3 and the second gas storage unit 312-3 may contain a fire extinguishing gas. The fire extinguishing gas may be carbon dioxide or nitrogen gas. The fire extinguishing gas may prevent fires caused by runaway that may occur due to abnormal operation of the cylindrical battery.

When the first insulator 350-1 and the second insulator 350-2 move upward and protrude to the outside, the operator can visually confirm the degree of protrusion of the first insulator 350-1 and the second insulator 350-2. In addition, the degree of generation of internal gas can be grasped through the degree of protrusion of the first insulator 350-1 and the second insulator 350-2.

FIG. 7 is a schematic cross-sectional view showing a top cap assembly according to another embodiment of the present disclosure.

Referring to FIG. 7, the top cap assembly 410 may include a first top cap assembly 411 and a second top cap assembly 412. The first top cap assembly 411 and the second top cap assembly 412 may be electrically separated by the insulator 450.

The insulator 450 may be formed in a structure extending in the length and width directions of the top cap assembly 410 while passing through the central part of the top cap assembly 410. The insulator 450 may include an upper insulator 450-1 and a lower insulator 450-2.

The first top cap assembly 411 may include a first top end cap 411-1, a first current interruptive device 411-2, a first gas storage unit 411-3 and a gasket 411-4. The first upper end cap 411-1 may form a positive electrode terminal in a form of being exposed to the outside. The first current interruptive device 411-2 may be formed in the lower part of the upper insulator 450-1.

The second top cap assembly 412 may include a second upper end cap 412-1, a second current interruptive device 412-2, a gas storage unit 412-3, and a second gasket 412-4. The second upper end cap 412-1 may form a positive electrode terminal in a form of being exposed to the outside. The second current interruptive device 412-2 may be formed in the lower part of the upper insulator 450-1.

The upper insulator 450-1 may be structured so as to be attached to the first current interruptive device 411-2 and the second current interruptive device 412-2. Thus, even if any one of the first current interruptive device 411-2 and the second current interruptive device 412-2 is operated, the upper insulator 450-1 may move upward and protrude. For example, when the first current interruptive device 411-2 is operated, the upper insulator 450-1 moves upward and the second current interruptive device 412-2 attached to the upper insulator 450-1 can also move upward together. In addition, when the second current interruptive device 412-2 is operated, the upper insulator 450-1 moves upward, and the first current interruptive device 411-2 attached to the upper insulator 450-1 can also move upward together.

When the upper insulator 450-1 moves upward and protrudes to the outside, the operator can visually confirm the degree of protrusion of the upper insulator 450-1. Further, the degree of generation of internal gas can be grasped through the degree of protrusion of the upper insulator 450-1.

When the first current interruptive device 411-2 or the second current interruptive device 412-2 is operated, internal gas can be collected in the first gas storage unit 411-3 and the second gas storage unit 412-3. However, contrary to the embodiments described above, according to this embodiment, even if the upper insulator 450-1 moves upward to the second height M1 or higher by the gas pressure collected in the first gas storage unit 411-3 and the second gas storage unit 412-3, the gas collected in the first gas storage unit 411-3 and the second gas storage unit 412-3 is not discharged to the outside. However, when excessive gas is generated due to heating or the like from the outside and the current interruptive devices 411-2 and 412-2 exceed the second height M1, the upper insulator 450-1 and the current interruptive devices 411-2 and 412-2 are discharged to the outside together, and internal gas can be discharged to the outside.

The first gas storage unit 411-3 may be a space formed by being recessed toward the first upper end cap 411-1. The first gas storage unit 411-3 may be formed between the first upper end cap 411-1, the upper insulator 450-1 and the first current interruptive device 411-2.

The first contact part 411-5 may be a contact part between the first upper end cap 411-1 and the first current interruptive device 411-2. When the first current interruptive device 411-2 moves upward, the first contact part 411-5 is opened and the internal gas may be collected in the first gas storage unit 411-3. Here, the first contact part 411-5 being opened means that the first upper end cap 411-1 and the first current interruptive device 411-2 are separated. The internal gas may be moved through a space generated when the first upper end cap 411-1 and the first current interruptive device 411-2 are separated, thereby being collected in the first gas storage unit 411-3.

The second top cap assembly 412 may have the same structure as the first top cap assembly 411. Therefore, details of the structure of the second top cap assembly 412 will be omitted.

The second gas storage unit 412-3 may have the same structure as the first gas storage unit 411-3. In addition, the second gas storage unit 412-3 may collect and discharge gas in the same manner as the first gas storage unit 411-3. Therefore, details of the second gas storage unit 412-3 will be omitted.

The first gas storage unit 411-3 and the second gas storage unit 412-3 may contain a fire extinguishing gas. The fire extinguishing gas may be carbon dioxide or nitrogen gas. The fire extinguishing gas may prevent fires caused by runaway that may occur due to abnormal operation of the cylindrical battery.

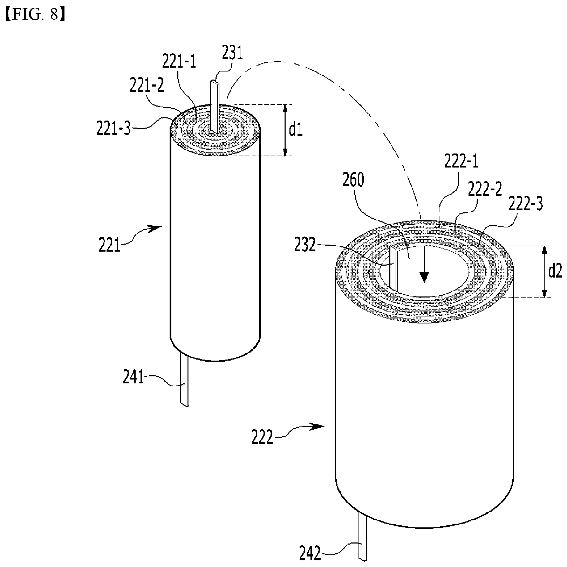

FIG. 8 is a schematic view showing that the electrode assembly of FIG. 2 is manufactured according to an embodiment of the present invention.

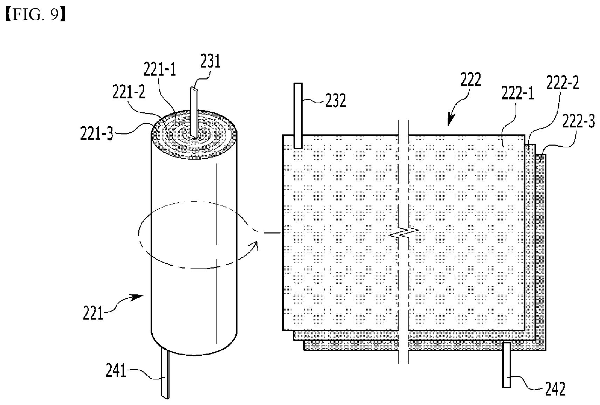

FIG. 9 is a schematic diagram showing that the electrode assembly of FIG. 2 is manufactured according to another embodiment of the present invention.

Referring to FIGS. 2, 8, and 9, the electrode assembly 220 includes a first electrode assembly 221 and a second electrode assembly 222. The first electrode assembly 221 is located in the central part of the second electrode assembly 222.

The first electrode assembly 221 is a structure in which a first positive electrode 221-1, a first separator 221-2, and a first negative electrode 221-3 are wound in a sequence. A first positive electrode tab 231 is formed in the upper part of the first electrode assembly 221 to be electrically connected to the first top cap assembly 211. A first negative electrode tab 241 is formed in the lower part of the first electrode assembly 221 to be electrically connected to the battery case.

The second electrode assembly 222 has a structure in which a second positive electrode 222-1, a second separator 222-2, and a second negative electrode 222-3 are wound in a sequence. A second positive electrode tab 232 is formed in the upper part of the second electrode assembly 222 to be electrically connected to the second top cap assembly 212. A second negative electrode tab 242 is formed in the lower part of the second electrode assembly 222 to be electrically connected to the battery case.

In the first electrode assembly 221, the first negative electrode 221-3 may include a negative active material. In the second electrode assembly 222, the second negative electrode 222-3 may include a negative active material. The content of silicon (Si) in the first negative electrode 221-3 may be 25% to 75% relative to the content of silicon in the second negative electrode 222-3. The loading amount of the negative active material of the first negative electrode 221-3 may be 40% to 70% relative to the loading amount of the negative active material of the second negative electrode 222-3.

With such a structure, it is possible to prevent the structure of the electrode assembly 220 from being deformed due to volume expansion and heat generation of the first negative electrode 221-3 and the second negative electrode 222-3 during the charging/discharging process of the cylindrical battery 200.

The electrode assembly is manufactured by winding the first electrode assembly 221 and the second electrode assembly 222, respectively, or alternatively is manufactured by inserting the first electrode assembly 221 into the central part 260 of the second electrode assembly 222. The first electrode assembly 221 is manufactured by winding a stack of the first positive electrode 221-1, the first separator 221-2, and the first negative electrode 221-3. The second electrode assembly 222 is manufactured by winding a stack of the second positive electrode 222-1, the second separator 222-2, and the second negative electrode 222-3. At this time, the second electrode assembly 222 is wounded the second electrode assembly 222 using a mandrel (not shown) equal to the diameter d2 of the central part 260. In addition, the diameter d2 of the central part 260 may be equal to the diameter d1 of the first electrode assembly 221.

In another example, the electrode assembly 220 is manufactured by a process including first manufacturing the first electrode assembly 221, and then winding a stack of the second negative electrode 222-1, the second separator 222-2 and the second negative electrode 222-3 by using the first electrode assembly 221 as a mandrel.

The cylindrical battery according to the embodiments of the present invention includes electrically separated electrode assemblies and top cap assemblies in one structure, so that the deformation of the electrode assemblies occurring in the charging/discharging process is minimized. In particular, it is possible to prevent stress from being concentrated in the central part of the electrode assemblies.

In addition, each electrode assembly can be controlled by electrically separated top cap assemblies, thereby providing a system capable of rapidly discharging the thermal energy generated inside.

Based on the above disclosure, this is to be understood by those of ordinary skill in the art that various applications and modifications can be made without departing from the scope of the present invention as defined in the appended claims.

### [Description of Reference Numerals]

210, 310, 410: top cap assembly
211-1, 311-1, 411-1: first upper end cap
212-1, 312-1, 412-1: second upper end cap
211-2, 311-2, 411-2: first current interruptive device
212-2, 312-2, 412-2: second current interruptive device
250, 350, 450: insulator

## Claims

1. A cylindrical battery (200) comprising:
a battery case;
electrode assemblies (221, 222);
first and second cap assemblies (211, 212; 311, 312; 411,412) located on the upper part of the electrode assemblies (221, 222);
a first positive electrode tab (231) and a second positive electrode tab (232) formed in the upper part of the electrode assemblies (221, 222) electrically connected respectively to the second and the first top cap assemblies (211, 212);
a negative electrode tab (240) formed in the lower part of the electrode assemblies (221, 222) to be electrically connected to the battery case,
wherein the first and second top cap assemblies (211, 212; 311, 312**;** 411,412) are electrically separated from each other by an insulator (250, 350, 450).

2. The cylindrical battery (200) according to claim 1,
wherein the first top cap assembly (211, 311, 411) comprises a first upper end cap (211-1, 311-1, 411-1), a first current interruptive device (211-2, 311.2, 411-2), and a first gas storage unit (211-3, 311-3, 411-3), and the second top cap assembly (212, 312, 412) comprises a second upper end cap (212-1, 312-1, 412-1), a second current interruptive device (212-2, 312-2, 412-2), and a second gas storage unit (212-3, 312-3, 412-3).

3. The cylindrical battery (200) according to claim 2,
wherein the insulator (250, 350, 450) comprises an upper insulator (250-1, 350-1, 450-1) and a lower insulator (250-2, 350-2, 450-2).

4. The cylindrical battery (200) according to claim 3,
wherein the upper insulator (250-1, 350-1, 450-1) has a "Π"-shaped cross-sectional shape, and wherein the upper insulator (250-1, 350-1, 450-1) is coupled in a structure that wraps an intermediate part of the lower insulator (250-2, 350-2, 450-2).

5. The cylindrical battery (200) according to claim 3,
wherein the lower insulator (250-2, 350-2, 450-2) is located between the first current interruptive device (211-2, 311-2, 411-2) and the second current interruptive device (212-2, 312-2, 412-2), and electrically insulates the first current interruptive device (211-2, 311-2, 411-2) and the second current interruptive device (212-2, 312-2, 412-2).

6. The cylindrical battery (200) according to claim 3,
wherein the upper insulator (250-1, 350-1, 450-1) is attached to the first current interruptive device (211-2, 311-2, 411-2) and the second current interruptive device (212-2, 312-2, 412-2).

7. The cylindrical battery (200) according to claim 6,
wherein even if any one of the first current interruptive device (211-2, 311-2, 411-2) and the second current interruptive device (212-2, 312-2, 412-2) is operated, the upper insulator (250-1, 350-1, 450-1) moves upward and protrudes to the outside.

8. The cylindrical battery (200) according to claim 6,
wherein when the first current interruptive device (211-2, 311-2, 411-2) or the second current interruptive device (212-2, 312-2, 412-2) is operated, gas generated in the electrode assembly (220) is collected in the first gas storage unit (211-3, 311-3, 411-3) and the second gas storage unit (212-3, 312-3, 412-3).

9. The cylindrical battery (200) according to claim 8,
wherein when the upper insulator (250-1) moves upward to a height L1 or higher due to the pressure of the gas collected in the first gas storage unit (211-3) and the second gas storage unit (212-3), the gas collected in the first gas storage unit (211-3) and the second gas storage unit (212-3) is discharged to the outside.

10. The cylindrical battery (200) according to claim 3,
wherein the insulator (350) comprises a first insulator (350-1), a second insulator (350-2), and a lower insulator (350-3), and
wherein the first insulator (350-1) and the second insulator (350-1) are structured so as to be separated from each other.

11. The cylindrical battery (200) according to claim 10,
wherein the first insulator (350-1) is attached to the first current interruptive device (311-2), and when the first current interruptive device (311-2) is operated, the first insulator (350-1) moves upward and protrudes, and
wherein the second insulator (350-2) is attached to the second current interruptive device (312-2), and when the second current interruptive device (312-2) is operated, the second insulator (350-2) moves upward and protrudes.

12. The cylindrical battery (200) according to claim 2,
wherein the electrode assembly (220) comprises a first electrode assembly (221) and a second electrode assembly (222), and the first electrode assembly (221) is located in the central part of the second electrode assembly (222).

13. The cylindrical battery (200) according to claim 12,
wherein a first positive electrode tab (231) of the first electrode assembly (221) is electrically connected to the first top cap assembly (211, 311, 411), and a second positive electrode tab (232) of the second electrode assembly (222) is electrically connected to the second top cap assembly (212, 312, 412).

14. A method for manufacturing a cylindrical battery (200) according to any of the preceding claims, comprising the steps of:
winding a first positive electrode (221-1), a first separator (221-2), and a first negative electrode (221-3) to manufacture a first electrode assembly (221);
winding a second positive electrode (222-1), a second separator (222-2), and a second negative electrode (222-3) to manufacture a second electrode assembly (222);
inserting the first electrode assembly (221) into the central part of the second electrode assembly (222);
electrically connecting a first positive electrode tab (231) of the first electrode assembly (221) to a first top cap assembly (211, 311, 411); and
electrically connecting a second positive electrode tab (232) of the second electrode assembly (222) to a second top cap assembly (212, 312, 412).

15. A method for manufacturing a cylindrical battery (200) according to any of the preceding claims 1-13, comprising the steps of:
winding a first positive electrode (221-1), a first separator (221-2), and a first negative electrode (221-3) to manufacture a first electrode assembly (221);
winding a stack of a second positive electrode (222-1), a second separator (222-2), and a second negative electrode (222-3) using the first electrode assembly (221) as a mandrel to manufacture a second electrode stack,
inserting the first electrode assembly (221) into the central part of the second electrode assembly (222);
electrically connecting a first positive electrode tab (231) of the first electrode assembly (221) to a first top cap assembly (211, 311, 411); and
electrically connecting a second positive electrode tab (232) of the second electrode assembly (222) to a second top cap assembly (212, 312, 412).

## Patentansprüche

1. Zylindrische Batterie (200) aufweisend:
ein Batteriegehäuse;
Elektrodenanordnungen (221, 222);
erste und zweite Kappenanordnungen (211, 212; 311, 312; 411, 412), die auf dem oberen Teil der Elektrodenanordnungen (221, 222) angeordnet sind;
eine erste positive Elektrodenlasche (231) und eine zweite positive Elektrodenlasche (232), die in dem oberen Teil der Elektrodenanordnungen (221, 222) ausgebildet sind, die mit der jeweiligen der zweiten und der ersten oberen Kappenanordnung (211, 212) elektrisch verbunden sind;
eine negative Elektrodenlasche (240), die in dem unteren Teil der Elektrodenanordnungen (221, 222) ausgebildet ist, um mit dem Batteriegehäuse elektrisch verbunden zu werden,
wobei die erste und die zweite obere Kappenanordnung (211, 212; 311, 312; 411, 412) durch einen Isolator (250, 350, 450) elektrisch voneinander getrennt sind.

2. Zylindrische Batterie (200) nach Anspruch 1,
wobei die erste obere Kappenanordnung (211, 311, 411) eine erste obere Endkappe (211-1, 311-1, 411-1), eine erste Stromunterbrechungsvorrichtung (211-2, 311-2, 411-2) und eine erste Gasspeichereinheit (211-3, 311-3, 411-3) aufweist, und die zweite obere Kappenanordnung (212, 312, 412) eine zweite obere Endkappe (212-1, 312-1, 412-1), eine zweite Stromunterbrechungsvorrichtung (212-2, 312-2, 412-2) und eine zweite Gasspeichereinheit (212-3, 312-3, 412-3) aufweist.

3. Zylindrische Batterie (200) nach Anspruch 2,
wobei der Isolator (250, 350, 450) einen oberen Isolator (250-1, 350-1, 450-1) und einen unteren Isolator (250-2, 350-2, 450-2) aufweist.

4. Zylindrische Batterie (200) nach Anspruch 3,
wobei der obere Isolator (250-1, 350-1, 450-1) eine "Π"-förmige Querschnittsform aufweist, und wobei der obere Isolator (250-1, 350-1, 450-1) in einer Struktur gekoppelt ist, die einen Zwischenteil des unteren Isolators (250-2, 350-2, 450-2) umwickelt.

5. Zylindrische Batterie (200) nach Anspruch 3,
wobei der untere Isolator (250-2, 350-2, 450-2) zwischen der ersten Stromunterbrechungsvorrichtung (211-2, 311-2, 411-2) und der zweiten Stromunterbrechungsvorrichtung (212-2, 312-2, 412-2) angeordnet ist und die erste Stromunterbrechungsvorrichtung (211-2, 311-2, 411-2) und die zweite Stromunterbrechungsvorrichtung (212-2, 312-2, 412-2) elektrisch isoliert.

6. Zylindrische Batterie (200) nach Anspruch 3,
wobei der obere Isolator (250-1, 350-1, 450-1) an der ersten Stromunterbrechungsvorrichtung (211-2, 311-2, 411-2) und der zweiten Stromunterbrechungsvorrichtung (212-2, 312-2, 412-2) angebracht ist.

7. Zylindrische Batterie (200) nach Anspruch 6,
wobei sich selbst dann, wenn irgendeine der ersten Stromunterbrechungsvorrichtung (211-2, 311-2, 411-2) und der zweiten Stromunterbrechungsvorrichtung (212-2, 312-2, 412-2) betätigt wird, der obere Isolator (250-1, 350-1, 450-1) nach oben bewegt und nach außen vorsteht.

8. Zylindrische Batterie (200) nach Anspruch 6,
wobei dann, wenn die erste Stromunterbrechungsvorrichtung (211-2, 311-2, 411-2) oder die zweite Stromunterbrechungsvorrichtung (212-2, 312-2, 412-2) betätigt wird, in der Elektrodenanordnung (220) erzeugtes Gas in der ersten Gasspeichereinheit (211-3, 311-3, 411-3) und der zweiten Gasspeichereinheit (212-3, 312-3, 412-3) gesammelt wird.

9. Zylindrische Batterie (200) nach Anspruch 8,
wobei dann, wenn sich der obere Isolator (250-1) aufgrund des Drucks des in der ersten Gasspeichereinheit (211-3) und der zweiten Gasspeichereinheit (212-3) gesammelten Gases nach oben auf eine Höhe L1 oder höher bewegt, das in der ersten Gasspeichereinheit (211-3) und der zweiten Gasspeichereinheit (212-3) gesammelte Gas nach außen abgegeben wird.

10. Zylindrische Batterie (200) nach Anspruch 3,
wobei der Isolator (350) einen ersten Isolator (350-1), einen zweiten Isolator (350-2) und einen unteren Isolator (350-3) aufweist, und
wobei der erste Isolator (350-1) und der zweite Isolator (350-2) so strukturiert sind, dass sie voneinander getrennt sind.

11. Zylindrische Batterie (200) nach Anspruch 10,
wobei der erste Isolator (350-1) an der ersten Stromunterbrechungsvorrichtung (311-2) angebracht ist und sich dann, wenn die erste Stromunterbrechungsvorrichtung (311-2) betätigt wird, der erste Isolator (350-1) nach oben bewegt und vorsteht, und
wobei der zweite Isolator (350-2) an der zweiten Stromunterbrechungsvorrichtung (312-2) angebracht ist und sich der zweite Isolator (350-2) nach oben bewegt und vorsteht, wenn die zweite Stromunterbrechungsvorrichtung (312-2) betätigt wird.

12. Zylindrische Batterie (200) nach Anspruch 2,
wobei die Elektrodenanordnung (220) eine erste Elektrodenanordnung (221) und eine zweite Elektrodenanordnung (222) aufweist und die erste Elektrodenanordnung (221) in dem mittleren Teil der zweiten Elektrodenanordnung (222) angeordnet ist.

13. Zylindrische Batterie (200) nach Anspruch 12,
wobei eine erste positive Elektrodenlasche (231) der ersten Elektrodenanordnung (221) mit der ersten oberen Kappenanordnung (211, 311, 411) elektrisch verbunden ist und eine zweite positive Elektrodenlasche (232) der zweiten Elektrodenanordnung (222) mit der zweiten oberen Kappenanordnung (212, 312, 412) elektrisch verbunden ist.

14. Verfahren zum Herstellen einer zylindrischen Batterie (200) nach einem der vorhergehenden Ansprüche, aufweisend die Schritte:
Wickeln einer ersten positiven Elektrode (221-1), eines ersten Separators (221-2) und einer ersten negativen Elektrode (221-3), um eine erste Elektrodenanordnung (221) herzustellen;
Wickeln einer zweiten positiven Elektrode (222-1), eines zweiten Separators (222-2) und einer zweiten negativen Elektrode (222-3), um eine zweite Elektrodenanordnung (222) herzustellen;
Einsetzen der ersten Elektrodenanordnung (221) in den mittleren Teil der zweiten Elektrodenanordnung (222);
elektrisches Verbinden einer ersten positiven Elektrodenlasche (231) der ersten Elektrodenanordnung (221) mit einer ersten oberen Kappenanordnung (211, 311, 411); und
elektrisches Verbinden einer zweiten positiven Elektrodenlasche (232) der zweiten Elektrodenanordnung (222) mit einer zweiten oberen Kappenanordnung (212, 312, 412).

15. Verfahren zum Herstellen einer zylindrischen Batterie (200) nach einem der vorhergehenden Ansprüche 1 bis 13, aufweisend die Schritte:
Wickeln einer ersten positiven Elektrode (221-1), eines ersten Separators (221-2) und einer ersten negativen Elektrode (221-3), um eine erste Elektrodenanordnung (221) herzustellen;
Wickeln eines Stapels einer zweiten positiven Elektrode (222-1), eines zweiten Separators (222-2) und einer zweiten negativen Elektrode (222-3) unter Verwendung der ersten Elektrodenanordnung (221) als einen Dorn, um einen zweiten Elektrodenstapel herzustellen,
Einsetzen der ersten Elektrodenanordnung (221) in den mittleren Teil der zweiten Elektrodenanordnung (222);
elektrisches Verbinden einer ersten positiven Elektrodenlasche (231) der ersten Elektrodenanordnung (221) mit einer ersten oberen Kappenanordnung (211, 311, 411); und
elektrisches Verbinden einer zweiten positiven Elektrodenlasche (232) der zweiten Elektrodenanordnung (222) mit einer zweiten oberen Kappenanordnung (212, 312, 412).

## Revendications

1. Batterie cylindrique (200) comportant :
un boîtier de batterie ;
des ensembles formant électrode (221, 222) ;
des premier et deuxième ensembles formant bouchon (211, 212 ; 311, 312 ; 411, 412) situés sur la partie supérieure des ensembles formant électrode (221, 222) ;
une première languette d'électrode positive (231) et une deuxième languette d'électrode positive (232) formées dans la partie supérieure des ensembles formant électrode (221, 222) connectées électriquement respectivement aux deuxième et premier ensembles formant bouchon supérieur (211, 212) ;
une languette d'électrode négative (240) formée dans la partie inférieure des ensembles formant électrode (221, 222) destinée à être connectée électriquement au boîtier de batterie,
dans laquelle les premier et deuxième ensembles formant bouchon supérieur (211, 212 ; 311, 312 ; 411, 412) sont séparés électriquement l'un par rapport à l'autre par un isolateur (250, 350, 450).

2. Batterie cylindrique (200) selon la revendication 1,
dans laquelle le premier ensemble formant bouchon supérieur (211, 311, 411) comporte un premier bouchon d'extrémité supérieure (211-1, 311-1, 411-1), un premier dispositif d'interruption de courant (211-2, 311-2, 411-2), et une première unité de stockage de gaz (211-3, 311-3, 411-3), et le deuxième ensemble formant bouchon supérieur (212, 312, 412) comporte un deuxième bouchon d'extrémité supérieure (212-1, 312-1, 412-1), un deuxième dispositif d'interruption de courant (212-2, 312-2, 412-2), et une deuxième unité de stockage de gaz (212-3, 312-3, 412-3).

3. Batterie cylindrique (200) selon la revendication 2,
dans laquelle l'isolateur (250, 350, 450) comporte un isolateur supérieur (250-1, 350-1, 450-1) et un isolateur inférieur (250-2, 350-2, 450-2).

4. Batterie cylindrique (200) selon la revendication 3,
dans laquelle l'isolateur supérieur (250-1, 350-1, 450-1) a une forme de section transversale en forme de « Π », et dans laquelle l'isolateur supérieur (250-1, 350-1, 450-1) est couplé dans une structure qui enveloppe une partie intermédiaire de l'isolateur inférieur (250-2, 350-2, 450-2).

5. Batterie cylindrique (200) selon la revendication 3,
dans laquelle l'isolateur inférieur (250-2, 350-2, 450-2) est situé entre le premier dispositif d'interruption de courant (211-2, 311-2, 411-2) et le deuxième dispositif d'interruption de courant (212-2, 312-2, 412-2), et isole électriquement le premier dispositif d'interruption de courant (211-2, 311-2, 411-2) et le deuxième dispositif d'interruption de courant (212-2, 312-2, 412-2).

6. Batterie cylindrique (200) selon la revendication 3,
dans laquelle l'isolateur supérieur (250-1, 350-1, 450-1) est fixé au premier dispositif d'interruption de courant (211-2, 311-2, 411-2) et au deuxième dispositif d'interruption de courant (212-2, 312-2, 412-2).

7. Batterie cylindrique (200) selon la revendication 6,
dans laquelle, même si l'un quelconque parmi le premier dispositif d'interruption de courant (211-2, 311-2, 411-2) et le deuxième dispositif d'interruption de courant (212-2, 312-2, 412-2) est actionné, l'isolateur supérieur (250-1, 350-1, 450-1) se déplace vers le haut et fait saillie vers l'extérieur.

8. Batterie cylindrique (200) selon la revendication 6,
dans laquelle, quand le premier dispositif d'interruption de courant (211-2, 311-2, 411-2) ou le deuxième dispositif d'interruption de courant (212-2, 312-2, 412-2) est actionné, le gaz généré dans l'ensemble formant électrode (220) est recueilli dans la première unité de stockage de gaz (211-3, 311-3, 411-3) et dans la deuxième unité de stockage de gaz (212-3, 312-3, 412-3).

9. Batterie cylindrique (200) selon la revendication 8,
dans laquelle, quand l'isolateur supérieur (250-1) se déplace vers le haut jusqu'à une hauteur L1 ou plus en raison de la pression du gaz recueilli dans la première unité de stockage de gaz (211-3) et dans la deuxième unité de stockage de gaz (212-3), le gaz recueilli dans la première unité de stockage de gaz (211-3) et dans la deuxième unité de stockage de gaz (212-3) est évacué vers l'extérieur.

10. Batterie cylindrique (200) selon la revendication 3,
dans laquelle l'isolateur (350) comporte un premier isolateur (350-1), un deuxième isolateur (350-2) et un isolateur inférieur (350-3), et
dans laquelle le premier isolateur (350-1) et le deuxième isolateur (350-1) sont structurés de manière à être séparés l'un par rapport à l'autre.

11. Batterie cylindrique (200) selon la revendication 10,
dans laquelle le premier isolateur (350-1) est fixé au premier dispositif d'interruption de courant (311-2), et quand le premier dispositif d'interruption de courant (311-2) est actionné, le premier isolateur (350-1) se déplace vers le haut et fait saillie, et
dans laquelle le deuxième isolateur (350-2) est fixé au deuxième dispositif d'interruption de courant (312-2), et quand le deuxième dispositif d'interruption de courant (312-2) est actionné, le deuxième isolateur (350-2) se déplace vers le haut et fait saillie.

12. Batterie cylindrique (200) selon la revendication 2,
dans laquelle l'ensemble formant électrode (220) comporte un premier ensemble formant électrode (221) et un deuxième ensemble formant électrode (222), et le premier ensemble formant électrode (221) est situé dans la partie centrale du deuxième ensemble formant électrode (222).

13. Batterie cylindrique (200) selon la revendication 12,
dans laquelle une première languette d'électrode positive (231) du premier ensemble formant électrode (221) est connectée électriquement au premier ensemble formant bouchon supérieur (211, 311, 411), et une deuxième languette d'électrode positive (232) du deuxième ensemble formant électrode (222) est connectée électriquement au deuxième ensemble formant bouchon supérieur (212, 312, 412).

14. Procédé de fabrication d'une batterie cylindrique (200) selon l'une quelconque des revendications précédentes, comportant les étapes consistant à :
enrouler une première électrode positive (221-1), un premier séparateur (221-2) et une première électrode négative (221-3) pour fabriquer un premier ensemble formant électrode (221) ;
enrouler une deuxième électrode positive (222-1), un deuxième séparateur (222-2) et une deuxième électrode négative (222-3) pour fabriquer un deuxième ensemble formant électrode (222) ;
insérer le premier ensemble formant électrode (221) dans la partie centrale du deuxième ensemble formant électrode (222) ;
connecter électriquement une première languette d'électrode positive (231) du premier ensemble formant électrode (221) à un premier ensemble formant bouchon supérieur (211, 311, 411) ; et
connecter électriquement une deuxième languette d'électrode positive (232) du deuxième ensemble formant électrode (222) à un deuxième ensemble formant bouchon supérieur (212, 312, 412).

15. Procédé de fabrication d'une batterie cylindrique (200) selon l'une quelconque des revendications précédentes 1 à 13, comportant les étapes consistant à :
enrouler une première électrode positive (221-1), un premier séparateur (221-2) et une première électrode négative (221-3) pour fabriquer un premier ensemble formant électrode (221) ;
enrouler un empilement constitué d'une deuxième électrode positive (222-1), d'un deuxième séparateur (222-2) et d'une deuxième électrode négative (222-3) en utilisant le premier ensemble formant électrode (221) comme mandrin pour fabriquer un deuxième empilement d'électrodes,
insérer le premier ensemble formant électrode (221) dans la partie centrale du deuxième ensemble formant électrode (222) ;
connecter électriquement une première languette d'électrode positive (231) du premier ensemble formant électrode (221) à un premier ensemble formant bouchon supérieur (211, 311, 411) ; et
connecter électriquement une deuxième languette d'électrode positive (232) du deuxième ensemble formant électrode (222) à un deuxième ensemble formant bouchon supérieur (212, 312, 412).
